# FASCICULE DE BREVET EUROPEEN

(11) **EP 1 652 180 B1**
(45) Date de publication et mention de la délivrance du brevet: **29.10.2008**
(21) Numéro de dépôt: 04786372.5
(22) Date de dépôt: 05.08.2004
(51) Int. Cl.: G11B 19/02, G11B 27/10, G11B 27/34

(54) **PROCEDE DE REPRODUCTION DE DOCUMENTS AUDIO A L'AIDE D'UNE INTERFACE PRESENTANT DES GROUPES DE DOCUMENTS, ET APPAREIL DE REPRODUCTION ASSOCIE**
VERFAHREN ZUM WIEDERGEBEN VON AUDIO-DOKUMENTEN MIT HILFE EINER SCHNITTSTELLE MIT DOKUMENTGRUPPEN UND ASSOZIIERTE WIEDERGABEEINRICHTUNG
METHOD FOR REPRODUCING AUDIO DOCUMENTS WITH THE AID OF AN INTERFACE COMPRISING DOCUMENT GROUPS AND ASSOCIATED REPRODUCING DEVICE

(30) Priorité: 07.08.2003 FR 0309716; 07.08.2003 FR 0309715
(43) Date de publication de la demande: 03.05.2006
(73) Titulaire: Thomson Licensing, 92100 Boulogne (FR)
(72) Inventeur: CHEVALLIER, Louis, F-35520 La Mézière (FR); GRASLAND, Izabela, F-35160 Bréteil (FR); VIGOUROUX, Jean-Ronan, F-35000 Rennes (FR); HENRY, Jean-Baptiste, F-35520 Melesse (FR)
(74) Mandataire: Le Dantec, Claude
(86) Numéro de dépôt international: PCT/FR2004/050374
(87) Numéro de publication internationale: WO 2005/017892

(56) Documents cités:
- EP-A- 1 227 392
- PATENT ABSTRACTS OF JAPAN vol. 1995, no. 05, 30 juin 1995 (1995-06-30) -& JP 07 044575 A (ATSUSHI MATSUSHITA; others: 01), 14 février 1995 (1995-02-14)

## Description

L'invention concerne un procédé de reproduction de documents audio à partir d'un appareil de reproduction, et un appareil de reproduction muni d'une interface utilisateur graphique permettant la sélection.

Le stockage d'un grand nombre de documents sonores au sein d'un équipement grand public est connu. L'appareil de reproduction est doté d'une interface permettant de retrouver facilement le document voulu par l'utilisateur. Les appareils de reproduction sont par exemple, des lecteurs baladeur de CD audio, les lecteurs baladeur contenant un disque dur (tel que le modèle MP3 Lyra commercialisé par la demanderesse) capable de mémoriser 300 heures de musique, des lecteurs de salon avec afficheur et télécommande, des ordinateurs personnel avec écran, disque dur, lecteur de CD et clavier. Dans tous les cas, l'utilisateur doit introduire l'identificateur précis du document audio à reproduire. Dans le cas de CD audio, il doit programmer le numéro du CD et le numéro du morceau au sein de ce CD. Dans certain cas, l'appareil de reproduction est doté d'un lecteur qui affiche l'identificateur du document audio en cours de reproduction. Par exemple, le lecteur MP3 LYRA dispose d'un petit écran LCD permettant d'afficher les fonctions sélectionnées sous la forme d'icônes, et les numéros des morceaux audio. Des équipements de salon disposent d'un disque dur de grande capacité, 20 Gigaoctets par exemple, ce qui permet de stocker des milliers de contenus sonores. L'interface graphique est constituée d'un grand écran permettant d'afficher plus d'informations, le titre complet du morceau par exemple.

Selon le type d'interface, la sélection des documents sonores s'effectue par un numéro ou par un identifiant au sein d'une liste affichée sur un écran. Avec l'accroissement des moyens de stockage, le nombre de documents à mémoriser est plus important et de ce fait, l'utilisateur peut passer un certain temps à rechercher celui qui l'intéresse. Lorsque des informations sous forme numérique sont associées aux documents sonores - on les appelle des attributs - l'appareil de reproduction peut créer des groupes. Les attributs des documents audio sont par exemple le genre (musique classique, pop, choral, jazz, ...), le titre, le producteur, le chanteur, la maison d'édition....

Par la détermination de groupes possédant une certaine unité musicale et par l'affichage de ces groupes à l'aide d'un identificateur, l'utilisateur peut d'abord sélectionner un groupe puis naviguer à l'intérieur de celui-ci pour chercher un morceau. L'identificateur du groupe est alors l'attribut commun aux documents.

Mais certains contenus audio accessibles à un utilisateur ne possèdent pas automatiquement ces attributs, par exemple lorsque l'utilisateur enregistre lui-même ses morceaux musicaux en direct.

Dans ce cas, une autre façon de classer des documents audio consiste à analyser directement les signaux sonores. Il existe des techniques d'analyse du signal qui permettent de calculer pour chaque contenu audio des valeurs de paramètres dits « de bas niveaux ». Ces paramètres sont par exemple : le tempo, l'énergie, la brillance, l'enveloppe, ... Ils sont déterminés par analyse du signal soit sous sa forme numérique, soit sous sa forme analogique. Une technique d'indexation de contenu audio est expliquée dans l'article « Speech and Language Technologies for audio indexing and retrieval » publié en août 2000 dans la revue IEEE page 1338 à 1353 du volume 88. L'article explique comment par analyse du signal audio, on peut classifier les différents contenus. D'autres articles décrivent des moyens de calcul de paramètres de bas niveau et des utilisations possibles, voici d'autres articles inclus par référence à la présente demande de brevet :
■ B. Feiten and S. Gunzel, Automatic indexing of a Sound Database using self-organizing neural networks, Computer Music Journal, 18 (3°, 1994
■ Eric Scheirer, Music Listening systems, PhD thesis, MIT Media Laboratory, Apr 2000.

Une fois que les paramètres de bas niveaux ont été déterminés pour chaque document sonore de la collection, l'appareil de stockage ou de reproduction peut les classer par groupes en fonction de ces paramètres. Ainsi, les contenus de musique classique peuvent constituer un groupe, de même les morceaux de jazz, un autre groupe. La demande de brevet PCT/GB01/00681 publiée le 23 août 2001 décrit une interface utilisateur constituée d'un graphisme affiché sur un écran et contrôlé par un récepteur audiovisuel. Le menu affiché présente des icônes (« Classical », «Jazz», « Chart Music », « Talk back », ...) sélectionnables par l'utilisateur, la sélection d'un document du groupe activant la reproduction de son contenu sonore. Les identificateurs des groupes peuvent être introduits par l'utilisateur en fonction des documents contenus dans le groupe à un instant donné. Mais lorsque de nouveaux documents sont téléchargés, l'identification des groupes doit pouvoir évoluer pour mieux définir le groupe. De plus, si beaucoup de documents sont affectés à un groupe, il peut être intéressant de le scinder en plusieurs groupes pour obtenir des ensembles de documents de taille moyenne. Une telle opération oblige l'utilisateur à redéfinir les identificateurs.

Le brevet japonais JP07-044575 divulgue un procédé de reconnaissance vocale permettant de traiter des documents vocaux ou des sources vocales et de les placer dans une vidéo. Les contenus vocaux sont représentés dans un espace (« sound field space ») par des symboles que l'on peut sélectionner à l'aide d'une souris. L'utilisateur se déplace dans le « sound field space » à l'aide de la souris. Les documents sont regroupés selon une structure hiérarchique. Lors de la navigation dans l'espace sonore, le volume d'un son d'un document est inversement proportionnel à la distance entre l'utilisateur placé dans l'espace et ce document. De ce fait, tous les sons associés aux documents d'un groupe sont émis, cette superposition de son ne facilite pas la navigation et la sélection au sein de cet espace sonore.

Un des objets de la présente invention vise à offrir à l'utilisateur un moyen automatique pour classer les documents en groupes et les identifier facilement pour l'utilisateur. Puis de façon performante et conviviale, l'utilisateur navigue de groupe en groupe, ainsi qu'au sein d'un groupe.

L'invention a pour objet un procédé de reproduction au sein d'un appareil de reproduction de documents audio caractérisé en ce qu'il comporte les étapes suivantes :
- partitionnement des documents en groupes de documents possédant au moins une caractéristique audio similaire,
- détermination d'au moins un document audio représentant chaque groupe,
- positionnement d'une pluralité de documents audio dans un espace, le positionnement d'un document audio étant fonction d'au moins une caractéristique du document, l'utilisateur occupant une position dans ledit espace
- reproduction d'au moins un identificateur d'un document représentant un groupe, le ou les identificateurs reproduits ayant une position située à une distance inférieure à une distance déterminée par rapport à la position de l'utilisateur dans l'espace.

De cette façon, l'appareil détermine lui-même les groupes de documents audio et au moins un document représentatif du groupe, un identificateur du ou des documents représentatifs étant mis en évidence de façon graphique et/ou auditive à l'utilisateur. De cette façon, l'utilisateur peut se rendre compte du type de musique qu'il s'agit et peut sélectionner ce groupe et des éléments de ce groupe afin de les reproduire. Selon un premier perfectionnement, l'utilisateur peut activer une commande permettant de passer d'un groupe à un autre, les identificateurs ainsi que les documents reproduits sont automatiquement mis à jour en fonction du groupe de document courant. Selon un autre perfectionnement, l'utilisateur peut en activant une commande reproduire les documents au sein du groupe dont l'identificateur est reproduit.

Selon un autre perfectionnement, le procédé comporte une étape de représentation des documents dans un espace dont le nombre de dimensions est égal à celui des paramètres audio, et dont les documents sont associés à des points disposés au sein de cet espace. De cette façon, la détermination d'un document représentant un groupe est déterminé en fonction de la distance entre l'équibarycentre des points associés aux documents du groupe et le point associé à ce document. Le document dont le point associé est le plus proche de l'équibarycentre est considéré comme représentant du groupe.

Selon un autre perfectionnement, le procédé comporte une étape de projection sur un espace de dimension déterminée des points associés aux documents de l'ensemble et possédant comme coordonnées les paramètres audio. De cette manière, on peut montrer l'ensemble des documents en représentant graphiquement l'espace de projection. De plus, les calculs de distance entre l'équibarycentre et chaque point associé à un document d'un groupe est plus simple à calculer. Selon une variante, les points des documents représentants un groupe sont situés à une distance de l'équibarycentre comprise dans un intervalle déterminé. De cette manière, un seul document ne caractérise pas le groupe mais plusieurs, qui entourant l'équibarycentre permettent à l'utilisateur de se rendre mieux compte du genre du groupe tout en notant sa diversité.

Selon un autre perfectionnement, lorsque l'utilisateur a sélectionné un groupe et qu'il reproduit les documents de ce groupe, l'ordre de reproduction des documents consiste à commencer par celui dont le point associé est le plus proche du barycentre, et ensuite à prendre ceux situés de plus en plus loin.

Selon un autre perfectionnement, un document considéré comme représentant d'un groupe possède des paramètres de bas niveau dont les valeurs sont proches de la moyenne des valeurs des documents du groupe.

Selon un autre perfectionnement, si plusieurs documents sont représentants d'un groupe, la reproduction de chacun des documents s'effectue séquentiellement pendant une période déterminée.

Selon un autre perfectionnement, l'appareil de reproduction reçoit les valeurs des paramètres audio. A partir de ces valeurs, l'appareil détermine les groupes et les documents représentant ces groupes.

L'invention a également pour objet un appareil de reproduction de documents audio comprenant un moyen d'introduction de commande; caractérisé en ce qu'il comporte en outre un moyen de calcul pour partitionner des documents en groupe de documents possédant au moins une caractéristiques audio similaire, un moyen de détermination d'au moins un document représentant chaque groupe, un moyen de calcul de données de positionnement associées à chaque document dans un espace, les données étant déterminées par au moins une caractéristique propre au document, une donnée de positionnement étant également affectée à la position de l'utilisateur au sein de l'espace, un moyen de sélection d'au moins un document représentant un groupe, le ou les documents sélectionnés ayant une position située à une distance inférieure à une distance déterminée par rapport à la position de l'utilisateur dans l'espace, un moyen de reproduction d'au moins un identificateur d'au moins un document représentant un groupe.

D'autres caractéristiques et avantages de l'invention apparaîtront maintenant avec plus de détails dans le cadre de la description qui suit d'exemples de réalisation donnés à titre illustratif en se référant aux figures annexées qui représentent :
- la figure 1 est un diagramme bloc d'un exemple d'appareil de reproduction de document sonore pour la mise en oeuvre de l'invention,
- la figure 2 est un tableau associant pour chaque document de la collection ses valeurs de paramètres de bas niveau,
- la figure 3 représente une projection sur un espace à deux dimensions des points associés à des documents appartenant à trois groupes,
- la figure 4 décrit une apparence d'écran présentant un fond d'écran et une interface pour la sélection des différents groupes de documents sonores.
- la figure 5 est un diagramme bloc d'un exemple d'appareil de reproduction de document sonore selon un second exemple de réalisation,
- la figure 6 décrit une représentation de l'espace sonore dans lequel évolue l'utilisateur selon un second exemple de réalisation de l'invention,
- la figure 7 décrit un diagramme bloc de l'interface audio selon un second exemple de réalisation de l'invention.

On décrira tout d'abord le fonctionnement d'un récepteur multimédia 1 associé à un dispositif d'affichage et de reproduction du son 2. Le récepteur comprend une unité centrale 3 reliée à une mémoire de programme 12, et une interface 5 pour la communication avec un bus numérique local à haut débit 6 permettant de recevoir des données audio et/ou vidéo à grand débit. Ce réseau est par exemple un réseau IEEE 1394. Le récepteur peut également recevoir des données audio et/ou vidéo d'un réseau de diffusion à travers une antenne de réception associée à un démodulateur 4, ce réseau peut être de type radio ou de télévision. Le récepteur comprend en outre un récepteur de signaux infrarouge 7 pour recevoir les signaux d'une télécommande 8, une mémoire 9 pour le stockage d'une base de données, et une logique de décodage audio/vidéo 10 pour la génération des signaux audiovisuels envoyés à l'écran de télévision 2. La télécommande 8 est dotée des touches de direction ↑, ↓, → et ← et des touches : « OK », « Groupe », « documents sonores » et « Select» dont nous verrons plus tard la fonction.

Le récepteur comprend également un circuit 11 d'affichage de données sur l'écran, appelé souvent circuit OSD, de l'anglais "On Screen Display" (signifiant littéralement "affichage sur l'écran"). Le circuit OSD 11 est un générateur de texte et de graphisme qui permet d'afficher à l'écran des menus, des pictogrammes ou autres graphismes, et des menus présentant la navigation. Le circuit OSD est contrôlé par l'Unité Centrale 3 et un navigateur 12. Le navigateur 12 est avantageusement réalisé sous la forme d'un module de programme enregistré dans une mémoire morte. Il peut aussi être réalisé sous la forme d'un circuit spécialisé de type ASIC par exemple.

Le bus numérique 6 et/ou le réseau de diffusion transmettent au récepteur des contenus audio soit sous forme numérique, soit sous forme analogique, le récepteur les enregistrant dans une mémoire 9. Selon un mode préféré de réalisation, les contenus audio sont reçus sous forme numérique, de préférence codés selon un standard de compression, MP3 par exemple, et stockés sous la même forme. Selon ce mode préféré de réalisation, la mémoire 9 est un disque dur de grande capacité, 40 Giga-octets par exemple. Le stockage d'une minute de contenu audio en MP3 occupant 1 Méga-octets environ, un tel disque est capable d'enregistrer 666 heures de document sonores. Le téléchargement de contenu audio est une technique bien connue qu'il est inutile d'expliquer dans la présente demande.

Une fois un certain nombre de contenus audio mémorisés dans la mémoire 9. L'utilisateur veut les reproduire et ceci sans trop d'interventions manuelles, il veut aussi que les contenus se succèdent avec une similitude pour maintenir une ambiance harmonieuse. Pour cela, un module logiciel du navigateur analyse chaque contenu audio lors de sa réception et en extrait les paramètres de bas niveau. Comme nous l'avons indiqué en préambule, il existe de nombreuses techniques d'analyse du signal qui permettent d'obtenir pour ces chansons des tableaux de descripteurs numériques. Le nombre des éléments d'un descripteur est de l'ordre de quelques dizaines.

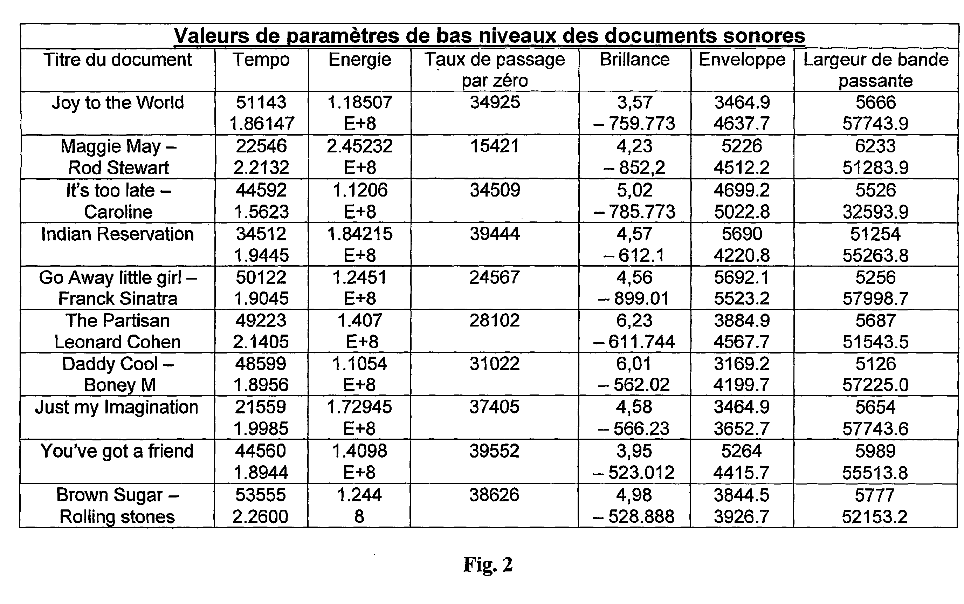

Le tableau contenu dans la page d'écran de la figure 2 présente les valeurs de paramètres de bas niveaux constituant les descripteurs d'un certain nombre de documents audio. La première colonne du tableau présente le titre du contenu audio, chaque contenu est numéroté. Les colonnes suivantes présentent les valeurs de paramètres de bas niveau associés au document, tels que l'intensité sonore moyenne, le tempo, l'énergie, le taux de passage par zéro (ou « zerocrossing » en Anglais), la brillance (ou « brightness » en Anglais), l'enveloppe, la largeur de bande passante (« bandwidth » en Anglais »), le « Loundness », les coefficients cepstraux.....

Selon un perfectionnement, les paramètres de bas niveaux peuvent être fournis sous forme numérique avec le contenu audio. Lorsque le contenu est fourni par un moyen de transmission numérique et sous forme compressée, les paramètres de bas niveaux associés constituant un champ attaché au contenu audio. Cette solution est particulièrement avantageuse car le calcul des paramètres est effectué par le producteur ou le fournisseur de contenu et non par l'utilisateur, de ce fait il est réalisé qu'une seule fois.

Qu'ils soient téléchargés ou calculés localement, les descripteurs sont stockés dans la mémoire 9 puis exploités afin de créer des groupes de documents possédant certaines similitudes. selon une première approche, Le regroupement des contenus en groupes (ou « cluster » en Anglais) cohérents peut être réalisé à l'aide d'un algorithme dit de « clustering », par exemple l'algorithme des k-means (Mac Queen, « Some Methods for classification and analysis of multivariate observations », Proc Fifth Berkeley Symposium on Math., Stat. and Prob., vol1, pp 281-296, 1967.) Le tableau des descripteurs de la figure 2 possède une nouvelle colonne définissant dans quel groupe le contenu se situe. Les techniques de calcul de groupe sont bien connues, en utilisant l'algorithme des k-means, on peut facilement contrôler le nombre des groupes ainsi produits.

Selon une deuxième approche, les groupes sont déterminés par un choix préalable de classes (par exemple : humeur (en Anglais : mood), instruments dominants, tempo, etc.) et une vérité de terrain contribuant à définir ces classes.

Une fois classés les documents au sein des différents groupes, le programme va ensuite déterminer un ou plusieurs documents représentatifs, ou représentants dudit groupe.

Une façon de faire consiste à positionner des points Pi identifiants chaque document d'un groupe dans un espace multidimensionnel et à calculer le document situé le plus près de l'équibarycentre de l'ensemble de ces points. L'equibarycentre est le centre de gravité d'un ensemble de points possédant la même masse. Les positions des points associés à chaque document sont obtenues à partir des paramètres de bas niveau, l'espace contenant ces points possède autant de dimension que le document possède de paramètres de bas niveau.

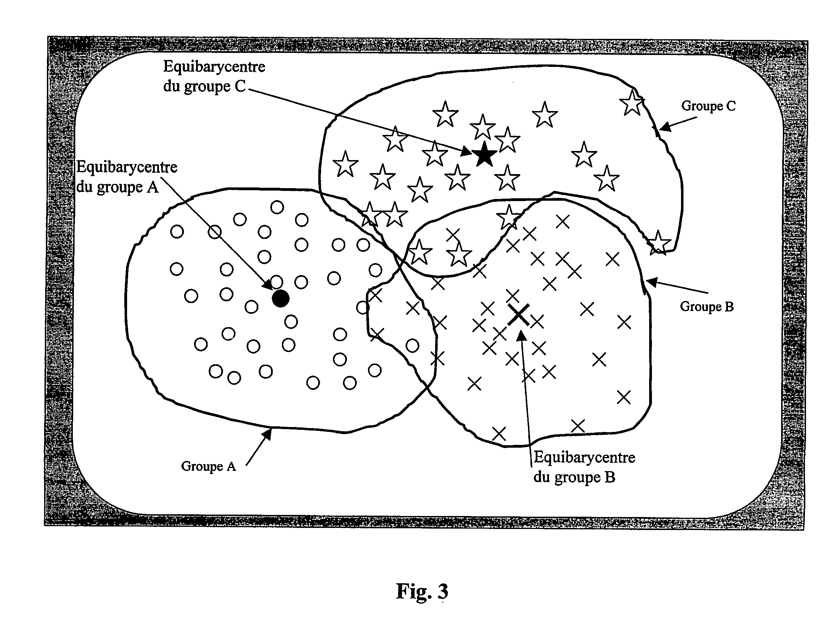

Pour expliquer clairement le principe on peut utiliser une projection sur un espace à deux dimensions. La figure 3 représente un espace à deux dimensions où sont disposés les points correspondant à trois groupes de documents, notés A B et C. Les coordonnées (xi, yi) de chaque point sont obtenues par projection du point Pi sur un espace de dimension 2. La projection est déterminée par analyse en composantes principales ou ACP. L'ACP est notamment décrit dans le document Saporta 1990, intitulé « Probabilités Analyse de données et statistiques, Edition Technip. » Cet algorithme d'analyse de données bien connu cherche à découvrir un sous-système d'axes lié linéairement à l'original qui « étale » au mieux les échantillons, ces axes tendent à confondre les axes originaux corrélés. Les descripteurs de bas niveau étant supposés avoir une cohérence perceptible (on peut percevoir les sons proches si et seulement si les valeurs des descripteurs de bas niveau sont proches), et la projection étant continue, les documents sonores associés à des points proches au sein de l'espace de dimension 2, se ressemblent sur le plan auditif. On peut appliquer le même exemple à un espace de dimension 3, en utilisant une projection dans un tel espace.

Le calcul de l'equibarycentre appliqué aux trois ensembles aboutit à la détermination de trois points GA, GB et GC, qui sont situés approximativement au centre de chaque contour délimitant les groupes A, B, et C tel que le montre la figure 3. Selon le présent exemple de réalisation, le document dont le point (xi, yi) est le plus proche de l'équibarycentre d'un groupe est considéré comme le représentant du groupe.

L'étape consistant à projeter les points sur un espace à une, deux ou trois dimensions permet de créer une représentation graphique de la collection de documents accessibles à partir d'un appareil. De plus, les calculs de distance entre l'équibarycentre et chaque point associé à un document d'un groupe est plus simple, car le nombre de dimensions de l'espace de projection est nettement inférieur aux nombre des paramètres de bas niveau. Selon l'appartenance à tel ou tel groupe, le point associé au document est d'une certaine forme (comme le montre la figure 3), ou d'une certaine couleur, ou tout autre caractéristique graphique distinctive. Une telle représentation graphique constitue avec un clavier une interface utilisateur permettant de sélectionner n'importe quel point au sein d'un groupe. Pour cela, l'utilisateur peut sauter d'un point à un autre en indiquant une direction de navigation à l'aide des touches de direction.

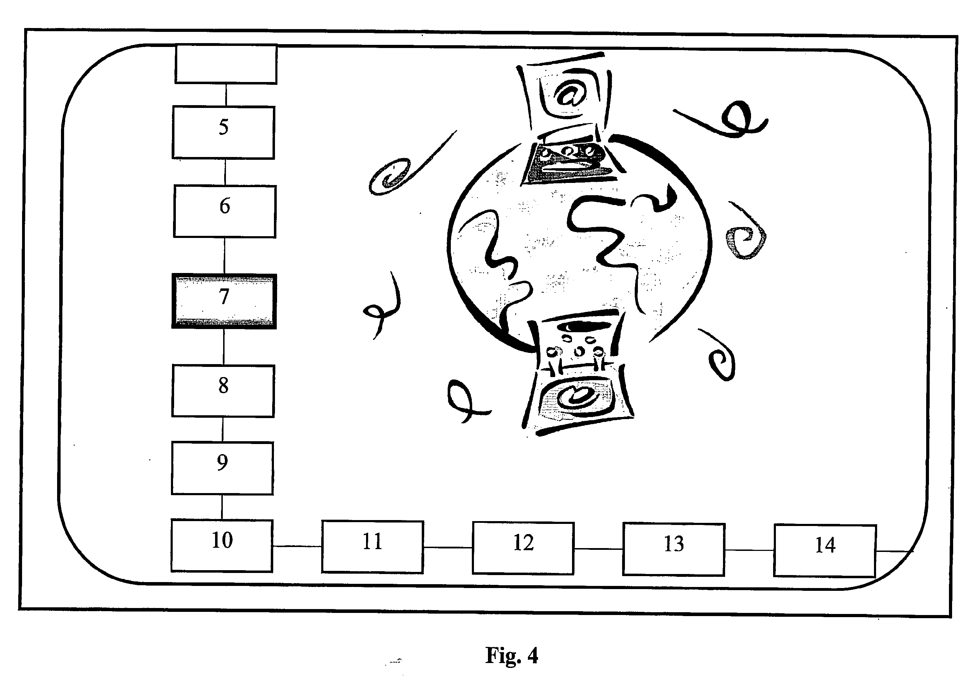

Mais l'étape de projection sur un espace à une, deux ou trois dimension est optionnel, car on peut parfaitement déterminer l'équibarycentre d'un groupe de points disposés dans un espace multidimensionnel, de même on peut calculer les distances séparant n'importe quel point du groupe avec l'équibarycentre. Dans ce cas, il est difficile de représenter par des points les documents, l'interface graphique présente alors uniquement des identificateurs graphiques de groupes. Un tel exemple d'interface graphique est présenté à la figure 4.

Sur la figure 4 apparaît une image en fond d'écran et un ensemble d'identificateurs graphiques de groupes. Un identificateur graphique de groupe est une icône contenant un nombre variant de 1 au nombre de groupes calculés lors de l'étape de détermination de groupes. Ces identificateurs sont reliés par un lien graphique donnant une indication à l'utilisateur de la commande de navigation à activer pour changer de groupes. Dans l'exemple illustré à la figure 3, le groupe 7 est sélectionné, en appuyant sur la touche de direction ↑, on sélectionne le groupe 6, et en appuyant sur la touche de direction ↓, le groupe 8. L'icône contenant le groupe courant (le groupe 7 sur la figure 4) est mis en évidence par un contour plus gras, ou par une surbrillance, ou par un clignotement ou encore un fond coloré. Si les icônes sont disposés horizontalement, l'utilisateur utilise les touches de direction → et ← pour changer de groupes.

Lorsque l'utilisateur navigue de groupes en groupes, l'appareil reproduit le document sonore représentant le groupe. De cette façon, l'utilisateur peut de façon auditive connaître le genre de son ou de musique qui est commune à l'ensemble des documents du groupe. Une variante consiste en ce qu'un nombre déterminé de documents sonores représentent le groupe. Selon cette variante, ces documents sont reproduits en boucle lorsque le groupe est sélectionné. Les documents représentants sont par exemple ceux situés à une distance inférieure à une valeur déterminée de l'équibarycentre. Une amélioration de cette variante consiste en ce que l'utilisateur détermine lui-même le nombre de documents représentants chaque groupe. De cette manière, l'utilisateur peut lancer la reproduction d'un nombre importants de documents ayant une continuité auditive et ceci avoir à les sélectionner manuellement. Le premier document sélectionné par le programme comme représentant est celui du groupe dont la distance est la plus faible de l'equibarycentre, puis le second, puis le troisième et ainsi de suite. Lorsque le nombre programmé par l'utilisateur est atteint, le programme sélectionne le premier document.

Une autre amélioration consiste à ne reproduire qu'un extrait de chaque document. La durée de chaque extrait peut être défini par le programme, ou de façon avantageuse, l'utilisateur programme cette durée. De cette manière, l'utilisateur peut rapidement se faire une idée du genre de documents sonores qui se trouvent dans le groupe.

Lorsqu'un groupe est sélectionné, l'utilisateur appuie sur la touche « documents sonores » pour sélectionner chaque document du groupe et ainsi activer sa reproduction sonore. Il peut alors passer d'un document à un autre grâce aux touches de direction → et ←. Si l'interface graphique le permet, le titre du document sonore est affiché. Avantageusement, les titres des deux documents situés immédiatement avant (sélectionnable par la touche ←) et après (sélectionnable par la touche →) sont également affichés. L'utilisateur peut ainsi connaître les deux documents directement reproductibles à partir du document courant.

Dans ce qui précède, on a décrit un mode de réalisation appliqué à un appareil disposant d'un moyen d'affichage (2). Ce moyen permettant de reproduire graphiquement l'identificateur du document représentant un groupe de documents ayant une similitude sonore. Selon un autre mode de réalisation, l'appareil ne dispose pas d'un moyen d'affichage perfectionné, lui permettant d'afficher au moins les identificateurs de groupe.

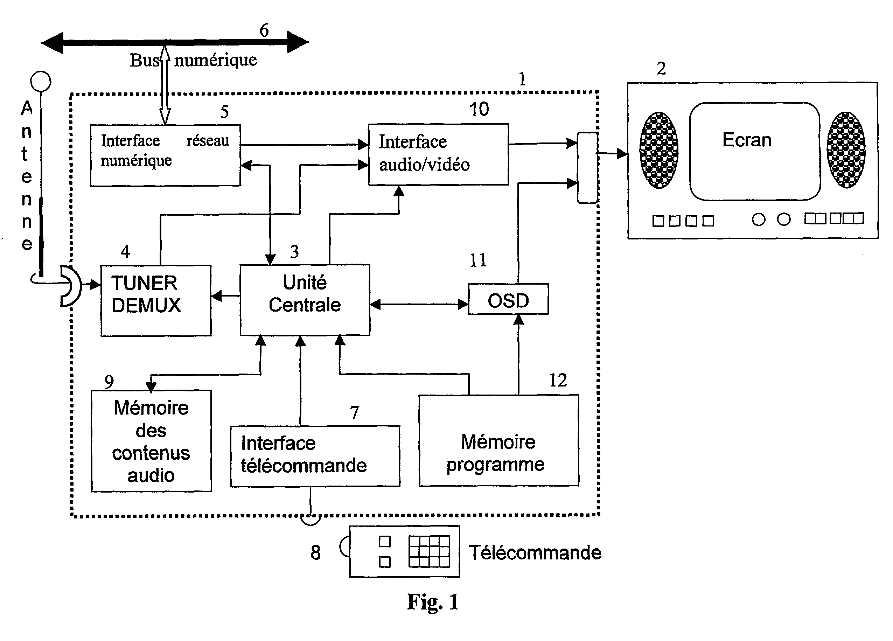

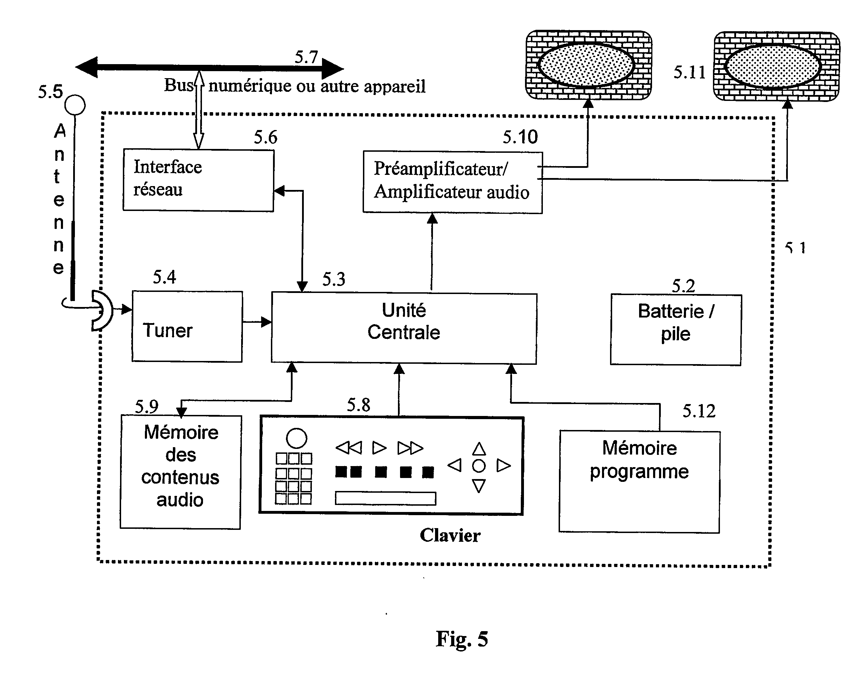

Un tel appareil est décrit par la figure 5, on décrit tout d'abord le fonctionnement d'un lecteur reproducteur de documents audio 5.1. Ce lecteur est portable et autonome, il dispose d'une batterie 5.2, une Unité Centrale 5.3 (UC) reliée à une mémoire de programme 5.12, d'un clavier 5.8 permettant à l'utilisateur d'introduire toutes les commandes nécessaires à la reproduction des contenus audio, une interface audio 5.10 comprenant au moins un convertisseur D/A, au moins un préamplificateur dont le gain est réglable par l'UC 5.3 et un amplificateur envoyant les signaux sonores amplifiés à au moins deux haut-parleurs 5.11. Le clavier 5.8 dispose de quatre touches de direction et d'un élément rotatif permettant d'introduire un mouvement de rotation vers la gauche ou vers la droite, des commandes classiques de reproduction d'un document sonore (lecture, avance rapide, retour rapide, arrêt, réglage du volume), d'un sélecteur rotatif et d'au moins une molette. Les haut-parleurs 5.11 sont connectés au lecteur, ils peuvent être des écouteurs sur un casque porté par l'utilisateur. Les contenus audio sont avantageusement enregistrés dans un disque dur 5.9, mais tout autre support d'enregistrement peut convenir, en particulier des supports amovibles (CD audio, DVD, cartouche magnétique, carte électronique, ...). Les contenus audio peuvent être téléchargés dans le disque dur 5.9 de la même façon que celle décrite pour la figure 1. Le téléchargement d'un contenu audio est une technique bien connue qu'il est inutile d'expliciter dans le présent document.

Une fois un certain nombre de contenus audio mémorisés dans la mémoire 5.9, l'utilisateur veut les sélectionner et les reproduire. Pour cela, le programme analyse chaque contenu audio et en extrait les paramètres de bas niveau. Les techniques d'analyse du signal sont identiques à celles indiquées précédemment pour l'appareil décrit par la figure 1.

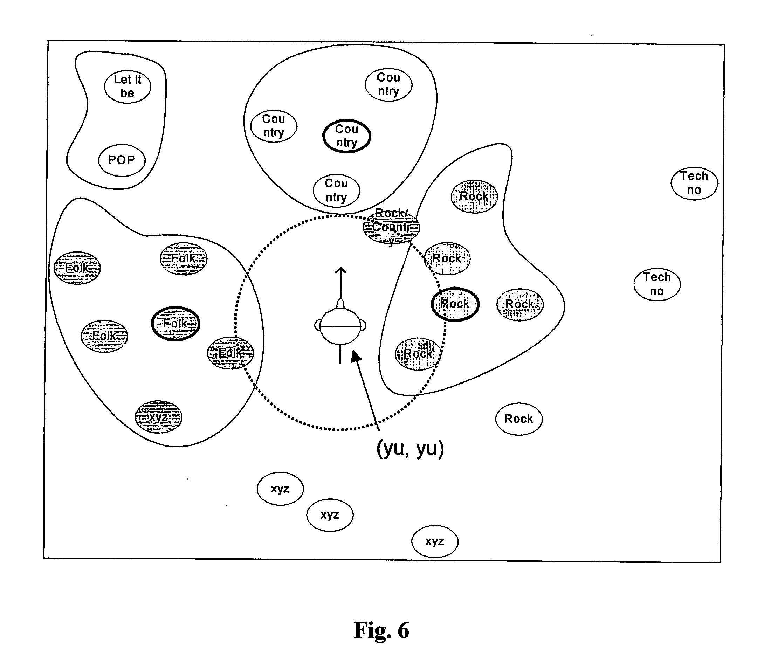

Selon un exemple de ce second mode de réalisation de l'invention, les documents sonores Di accessibles à partir du lecteur sont virtuellement représentés par des points Pi disposés dans un espace sonore à n dimensions. Par souci de simplicité et de compréhension, ce second exemple de réalisation utilise un espace sonore à deux dimensions. Le schéma de la figure 6 illustre une telle disposition. Les positions des points Pi, définies par leurs coordonnées (xi, yi) au sein de l'espace sonore, sont calculées à partir des paramètres de bas niveau. Selon l'exemple de la figure 3, un point Pi est un identificateur représentant un document sonore Si. Les coordonnées (xi, yi) sont obtenues par projection du point Pi dont les coordonnées sont les valeurs des descripteurs de bas niveau sur un échantillon sonore, sur un espace de dimension 2, 3, etc., selon le type de représentation choisie. La projection depuis l'espace des descripteurs vers cet espace à 2 dimensions est déterminée par une analyse en composantes principales ou ACP. L'ACP est notamment décrit dans le document Saporta 1990, intitulé « Probabilités Analyse de données et statistiques, Edition Technip ». Cet algorithme d'analyse de données a pour but de déterminer un sous-système d'axes lié linéairement à l'original qui « étale » au mieux les documents, ces axes tendent à confondre les axes originaux corrélés.. De cette manière, le programme peut analyser les documents sonores et détermine lui-même des dimensions principales c'est alors le programme qui choisit le nombre de dimensions de l'espace sonore. Selon cette technique, la collection de document peut être représentée par un espace à plus de deux dimensions. On peut ainsi créer un espace sonore à trois dimensions où évolue l'utilisateur. Dans ce cas, il faut équiper l'installation de haut-parleurs 5.11 supplémentaires, et les disposer en haut et en bas de façon à donner à l'utilisateur l'impression que le son vient aussi du haut ou du bas. Les descripteurs de bas niveau étant supposés avoir une cohérence perceptible et la projection étant continue, les points proches correspondent à des sons perceptuellement proches. De façon générale, les coordonnées {xᵢ, y₂,... zi} d'un point Pi dans un espace multidimensionnel permettent à l'utilisateur de déterminer le type du document sonore associé. En effet, les positions des points Pi étant calculées en fonction des valeurs de paramètres de bas niveau, si deux points sont graphiquement éloignés, les valeurs des paramètres de bas niveau des deux documents sonores identifiés par ces deux points sont très différentes et donc, le type du contenu sonore est différent, par exemple un morceau de musique classique et un discours politique. Par contre, si deux points sont proches, les types des documents sonores associés le sont aussi sur le plan auditif.

L'utilisateur sélectionne un document au sein de l'espace sonore par la perception auditive que le lecteur génère. Pour cela, le lecteur positionne l'utilisateur au centre de l'espace sonore, en un point Pu de coordonnées (xu, yu), et sélectionne les documents audio dont les points Pi sont les plus près de la position (xu, yu) en vue de les reproduire. Par sa perception auditive, l'utilisateur appréhende l'espace sonore, et peut se diriger vers un document Di à l'aide du son « émis » par le point Pi associé à ce document, en actionnant le touche qui donne la direction du haut-parleur 11 reproduisant avec la plus forte intensité ce document.

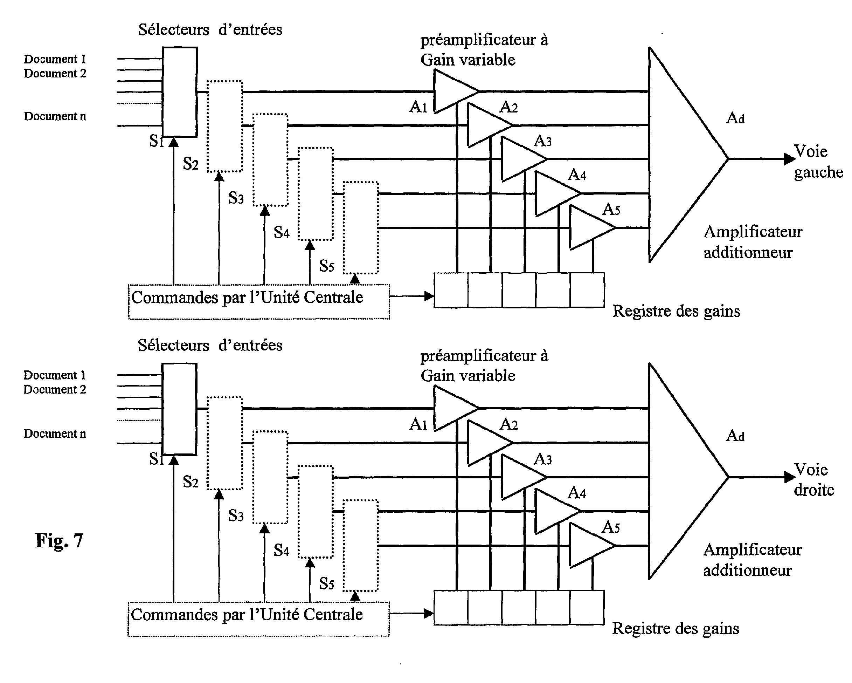

Le schéma de la figure 7 illustre les détails de l'interface audio 5.10. L'interface audio 5.10 se compose de deux parties identiques, l'une pour la reproduction sur l'écouteur gauche 5.11 et l'autre pour l'écouteur droit 5.11. Le nombre de documents sélectionnés par le programme doit être faible, cinq par exemple. Pour chaque voie, l'UC 5.3 associé à son programme enregistré dans la mémoire 5.12 contrôle cinq sélecteurs S1, S2, S3, S4 et S5 dont les fonctions sont de sélectionner un document dans l'ensemble des documents audio de la mémoire 5.9 et de le reproduire. Les cinq signaux audio sélectionnés par les sélecteurs Si sont transmis respectivement à cinq préamplificateurs A1, A2, ,A3, A4 et A5 dont les gains sont contrôlés par l'UC 5.3. Le gain d'un préamplificateur Ai reproduisant un document audio Di est proportionnel à la distance dans l'espace sonore séparant le point (xu, yu) et le point Pi de coordonnées (xi, yi) associé à ce document. Le gain dépend aussi de la direction où se situe le point (xi, yi) par rapport à une droite partant du point (xu, yu) dans la direction face à l'utilisateur placé dans l'espace sonore. Cette droite est représentée par une flèche sur la figure 7. De telle sorte que, tous les documents dont les points Di sont situés à gauche de l'utilisateur dans l'espace sonore sont reproduits par la voie gauche, et ceux situés à droite sont reproduits par la voie droite. De plus, le gain est d'autant plus grand que l'angle entre le segment formé des points Pi et Pu, et la droite Du représentant la direction face à l'utilisateur. Si le document est pile en face de l'utilisateur, le point Pi est donc sur cette droite Du alors, l'utilisateur entend le contenu audio de ce point aussi bien à gauche qu'à droite. Enfin, les cinq signaux émis par les préamplificateurs sont mélangés dans un amplificateur additionneur et amplifié avant d'être envoyés vers les écouteurs ou haut-parleurs 5.11.

Ainsi, l'utilisateur entend des contenus audio différents à gauche et à droite de ses oreilles. En fonction des signaux sonores, il peut s'orienter vers la gauche ou la droite à l'aide des touches de direction placées sur le clavier 5.8, et se diriger vers un point correspondant à un contenu Di qu'il désire écouter. Lorsque le point (xu, yu) se situe au même endroit que le point (xi, yi) correspondant au document sonore Di, ou en est proche d'au plus une distance déterminée, le document est considéré comme sélectionné et reproduit en stéréo sur les deux écouteurs 5.11, les quatre autres documents ne sont plus reproduits. Si l'utilisateur appuie sur les touches de direction et s'éloigne du document qu'il vient d'écouter, le programme reproduit alors les cinq documents les plus proches du point (xu, yu) avec les pondérations correspondantes à la distance et à la direction.

Une variante consiste à implémenter une touche « Sélection » sur le clavier 5.8 du lecteur 5.1. Lorsque l'utilisateur appuie sur cette touche, le programme sélectionne le document sonore le plus proche du point (xu, yu) où se trouve virtuellement l'utilisateur et commande sa reproduction à l'exclusion de tout autre document. La position (xu, yu) est mémorisée de sorte qu'un second appui sur la touche « Sélection » fait revenir à l'état précédent où les cinq documents sonores les plus proches de la position du point (xu, yu) sont reproduits.

Nous allons maintenant décrire des perfectionnements qui vont aider l'utilisateur à naviguer dans l'espace sonore.

Les cinq documents les plus proches du point associé à l'utilisateur sont également proches auditivement parlant, de sorte qu'il n'est pas facile pour l'utilisateur de déterminer un axe de déplacement en fonction d'un type particulier de musique par exemple. Un premier perfectionnement consiste à déterminer des groupes de documents sonores ayant une cohérence auditive, et à reproduire un ou plusieurs documents dits « représentant(s) » de chaque groupe. La détermination des groupes peut s'effectuer que ce qui a été précédemment décrit, par exemple en comparant les valeurs contenues dans les descripteurs des documents sonores, qu'ils soient téléchargés ou calculés localement, et en regroupant ceux dont les valeurs sont proches.

De façon particulièrement simple à calculer, le représentant d'un groupe est le document audio dont le point est situé le plus proche du centre de la nébuleuse des points de chaque document audio du groupe. Son identificateur est le contenu audio. Selon une variante, le représentant est une succession de documents ou d'extraits des documents du groupe, l'identificateur est alors un contenu sonore constitué par la reproduction successive d'extraits de chaque document représentant le groupe, chaque extrait étant reproduit pendant 10 secondes par exemple. Les extraits sont reproduit en boucle. Selon une autre variante, le programme produit un son synthétique calculé à partir d'une moyenne des paramètres de bas niveau caractéristiques des documents sonores du groupe.

L'affectation d'un document à un groupe déterminé s'effectue en rajoutant une nouvelle colonne au tableau des descripteurs de la figure 2, cette nouvelle colonne contient le numéro identifiant le groupe auquel le document appartient. Sur la figure 6, on a identifié par des contours quatre groupes Lorsque l'utilisateur veut naviguer sur des groupes, il appuie sur une touche du lecteur, appelée « Groupe » et selon l'exemple illustré par cette figure, les quatre documents les plus représentatifs de chaque groupe sont reproduits (ces quatre documents apparaissent sur la figure 6 par un contour en gras). Ce mode de navigation est désactivé en appuyant une nouvelle fois sur la touche « Groupe ». En naviguant d'abord d'un groupe à l'autre, l'utilisateur sélectionne rapidement le type de contenu audio qu'il souhaite, puis en désactivant le mode, il navigue de document proche en document proche au sein de ce groupe. En actionnant l'élément rotatif disposé sur le clavier 5.8, l'utilisateur reste sur le même point Pu de l'espace sonore et change la direction indiquée par la flèche sur la figure 6. Ainsi, l'utilisateur peut tout en restant sur place chercher une direction de déplacement, stopper sa rotation lorsque le type de musique qui perçoit en face de lui et se diriger ensuite dans cette direction.

Une variante de la touche « groupe » consiste à considérer la vitesse de déplacement comme moyen de sélection du mode de navigation et de la façon de calculer les groupes. L'utilisateur se déplace en appuyant sur les quatre touches de direction, lorsqu'il appuie longtemps sur une touche ou de façon successive et rapide, le programme considère que l'utilisateur désire augmenter la vitesse de déplacement. Un unique et court appui sur une touche permet de revenir à une vitesse de déplacement normale. Une variante consiste à implémenter une molette sur le clavier 5.8 permettant à l'utilisateur de déterminer finement la vitesse. En cas de déplacement rapide, le programme crée peu de groupes de grande taille. Ces groupes contenant de nombreuses chansons, les représentants que l'utilisateur entendra ne donneront forcément qu'une idée approximative du contenu des groupes. Si l'utilisateur ralentit sa vitesse de déplacement, le programme va créer des groupes plus petits et donc permettre à l'utilisateur une sélection plus fine. Dans ce cas, il est inutile de calculer des groupes pour tout l'ensemble des chansons mais seulement dans le voisinage de l'utilisateur. Ces groupes étant définis plus finement, les représentants sont plus fidèles au contenu des groupes. Lorsque la vitesse est minimale, seuls les documents les plus proches sont reproduits et ainsi on retrouve le mode de navigation de documents proches en documents proches.

Bien que la présente invention ait été décrite en référence aux modes de réalisation particuliers illustrés, celle-ci n'est nullement limitée par ces modes de réalisation, mais ne l'est que par les revendications annexées. On notera que des changements ou des modifications pourront être apportés par l'Homme du métier.

## Revendications

1. Procédé de reproduction au sein d'un appareil de reproduction de documents audio mémorisés dans ledit appareil
**caractérisé en ce**
**qu'**il comporte les étapes suivantes exécutées au sein de l'appareil :
- analyse des signaux sonores de chaque document audio afin de déterminer au moins une caractéristique audio,
- partitionnement des documents en groupes de documents possédant au moins une caractéristique audio similaire,
- détermination d'au moins un document audio représentant chaque groupe,
- positionnement d'une pluralité de documents audio dans un espace, le positionnement d'un document audio étant fonction d'au moins une caractéristique du document déterminée lors de l'étape d'analyse, l'utilisateur occupant une position dans ledit espace
- reproduction d'au moins un document représentant un groupe, le ou les documents reproduits ayant une position située à une distance inférieure à une distance déterminée par rapport à la position de l'utilisateur dans l'espace.

2. Procédé de reproduction selon la revendication 1 ; **caractérisé en ce qu'**il comporte une étape d'introduction de commandes de navigation de groupes en groupes, chaque commande activant la reproduction d'au moins un identificateur représentant le groupe mis en évidence graphiquement.

3. Procédé de reproduction selon la revendication 1 ou 2 ; **caractérisé en ce qu'**il comporte une étape d'introduction d'une commande activant la reproduction de documents audio au sein du groupe dont l'identificateur est reproduit, la reproduction de documents audio s'effectuant selon un ordre prédéterminé.

4. Procédé de reproduction selon l'une quelconque des revendications précédentes ;
**caractérisé en ce que**
l'étape de détermination comporte une étape de représentation des documents dans un espace dont le nombre de dimensions est égal à celui des paramètres audio, et dont les documents sont associés à des points disposés au sein de cet espace, la détermination d'un document du groupe comme représentant de ce groupe dépendant de la distance entre l'équibarycentre des points associés aux documents du groupe et le point associé à ce document.

5. Procédé de reproduction selon la revendication 4 ; **caractérisé en ce que** l'étape de représentation comporte une étape de projection sur un espace de dimension déterminée des points associés aux documents de l'ensemble et possédant comme coordonnées les paramètres audio, le calcul de distance entre l'équibarycentre du groupe et le point associé à ce document s'effectuant dans l'espace de projection.

6. Procédé de reproduction selon l'une quelconque des revendications 4 ou 5 ; **caractérisé en ce que** les documents représentant un groupe sont associés à des points situés à des distances de l'équibarycentre des points des documents du groupe comprises dans un intervalle déterminé.

7. Procédé de reproduction selon l'une quelconque des revendications 4 à 6 sous la dépendance de la revendication 3 ; **caractérisé en ce que** l'ordre prédéterminé de reproduction des documents d'un groupe consiste à commencer par celui dont le point est le plus proche du barycentre, et ensuite à prendre ceux situés de plus en plus loin.

8. Procédé de reproduction selon la revendication 1 à 3 ; **caractérisé en ce qu'**un document représentant d'un groupe possède des paramètres de bas niveau dont les valeurs sont proches de la moyenne des valeurs des documents du groupe.

9. Procédé de reproduction selon l'une quelconque des revendications précédentes ; **caractérisé en ce que** si plusieurs documents sont représentants d'un groupe, la reproduction de chacun des documents s'effectue séquentiellement pendant une période déterminée.

10. Procédé de reproduction selon l'une quelconque des revendications précédentes ; **caractérisé en ce que** l'identificateur reproduit est de nature sonore.

11. Procédé de reproduction selon l'une quelconque des revendications 1 à 9 ; **caractérisé en ce que** l'identificateur reproduit est de nature graphique.

12. Appareil de reproduction de documents audio (1 ; 5.1) comprenant un moyen d'introduction de commande (8, 5.8) et un moyen d'enregistrement (9) de documents audio ; **caractérisé en ce qu'**il comporte en outre
- un moyen pour analyser les signaux sonores de chaque document audio enregistré afin de déterminer au moins une caractéristique audio,
- un moyen (3, 12, 5.3, 5.12) pour partitionner des documents en groupe de documents possédant au moins une caractéristiques audio similaire,
- un moyen pour déterminer (3, 12 ; 5.3, 5.12) au moins un document représentant chaque groupe,
- un moyen pour calculer (3, 12, 5.3, 5.12) des données (xi, yi) de positionnement associées à chaque document dans un espace, les données étant déterminées par au moins une caractéristique propre au document calculée par le moyen d'analyse, une donnée de positionnement étant également affectée à la position de l'utilisateur au sein de l'espace,
- un moyen pour sélectionner (3, 12, 5.3, 5.12) au moins un document représentant un groupe, le ou les documents sélectionnés ayant une position située à une distance inférieure à une distance déterminée par rapport à la position de l'utilisateur dans l'espace,
- un moyen pour reproduire (10, 11 ; 5.1, 5.11) le ou les documents sélectionnées représentant un groupe.

13. Appareil de reproduction de documents audio selon la revendication 12 ; **caractérisé en ce qu'**il comporte en outre un moyen d'introduction de commandes de navigation (8 ; 5.8) de groupes en groupes, chaque commande activant la reproduction d'au moins un identificateur représentant le groupe mis en évidence graphiquement.

14. Appareil de reproduction de documents audio selon la revendication 12 ou 13 ; **caractérisé en ce qu'**il comporte un moyen d'introduction d'une commande (8 ; 5.8) activant le moyen pour reproduire (10, 11 ; 5.1, 5.11) des documents audio au sein du groupe dont l'identificateur est reproduit, la reproduction des documents audio s'effectuant selon un ordre prédéterminé.

15. Appareil de reproduction de documents audio selon l'une quelconque des revendications 12 à 14 ; **caractérisé en ce qu'**il comporte un moyen pour représenter (11) des documents dans un espace dont le nombre de dimensions est égal à celui des paramètres audio, et dont les documents sont associés à des points disposés au sein de cet espace, le moyen pour déterminer au moins un document représentant un groupe (3, 12 ; 5.3, 5.12) prend en compte la distance entre l'équibarycentre des points associés aux documents du groupe et le point associé à ce document.

16. Appareil de reproduction de documents audio selon la revendication 15 ; **caractérisé en ce que** le moyen pour déterminer au moins un document représentant un groupe (3, 12 ; 5.3, 5.12) choisit ceux/celui dont le point est le plus proche de l'équibarycentre des points des documents du groupe.

17. Appareil de reproduction de documents audio selon la revendication 15 ou 16 sous la dépendance de la revendication 14 ; **caractérisé en ce que** le moyen pour reproduire (10, 11 ; 5.1, 5.11) reproduit les documents en commençant par celui dont le point est le plus proche du barycentre des points associés aux documents du groupe, et ensuite ceux situés de plus en plus loin du barycentre.

18. Appareil de reproduction de documents audio selon l'une quelconque des revendications 12 à 17; **caractérisé en ce que** le moyen pour déterminer au moins un document représentant un groupe (3, 12 ; 5.3, 5.12) choisit ceux/celui dont les valeurs des caractéristiques audio sont proches de la moyenne des valeurs des documents du groupe.

19. Appareil de reproduction de documents audio selon l'une quelconque des revendications 12 à 18 ; **caractérisé en ce que** si le moyen pour déterminer (3, 12 ; 5.3, 5.12) a choisi plusieurs documents représentant un groupe, le moyen pour reproduire (10, 11 ; 5.1, 5.11) reproduit séquentiellement chaque identificateur des documents choisis pendant une période déterminée.

20. Appareil de reproduction de documents audio selon l'une quelconque des revendications 12 à 19 ; **caractérisé en ce que** le moyen pour reproduire (10, 11 ; 5.1, 5.11) reproduit au moins un identificateur sonore.

21. Appareil de reproduction de documents audio selon l'une quelconque des revendications 12 à 20; **caractérisé en ce que** le moyen pour reproduire (10, 11; 5.1, 5.11) reproduit au moins un identificateur graphique.

## Claims

1. Reproduction method within a reproduction device of audio documents stored in said device
**characterized in that**
it comprises the following steps carried out within the device:
- analysis of the sound signals of each audio document to determine at least one audio characteristic,
- partitioning of the documents into groups of documents having at least one similar audio characteristic,
- determination of at least one audio document representing each group,
- positioning of a plurality of audio documents in a space, the positioning of an audio document being dependent on at least one characteristic of the document determined during the analysis step, the user occupying a position in said space
- reproduction of at least one document representing a group, the document or documents having a position situated at a distance less than a distance determined with respect to the position of the user in the space.

2. Reproduction method according to claim 1, **characterized in that** it comprises an introduction step of navigation commands of groups in groups, each command activating the reproduction of at least one identifier representing the group graphically highlighted.

3. Reproduction method according to claim 1 or 2, **characterized in that** it comprises an introduction step of a command activating the reproduction of audio documents within the group of which the identifier is reproduced, the reproduction of audio documents being carried out according to a predetermined order.

4. Reproduction method according to any one of the aforementioned claims,
**characterized in that**
the determination step comprises a representation step of the documents in a space of which the number of dimensions is equal to the number of audio parameters, and of which the documents are associated with points arranged within this space, the determination of a document of the group as representative of this group depending on the distance between the equibarycentre of the points associated with the documents of the group and the point associated with this document.

5. Reproduction method according to claim 4, **characterized in that** the representation step comprises a projection step, on a space of determined dimension, of the points associated with the documents of the set and having as coordinates the audio parameters, the calculation of distance between the equibarycentre of the group and the point associated with this document being carried out in the projection space.

6. Reproduction method according to any one of claims 4 or 5, **characterized in that** the documents representing a group are associated with the points located a distances from the equibarycentre of points of the documents of the group comprised in a determined interval.

7. Reproduction method according to any one of claims 4 to 6, depending on claim 3, **characterized in that** the predetermined order of reproduction of the documents of a group consists in beginning with the one whose point is closest to the barycentre, and then taking those located further and further away.

8. Reproduction method according to claim 1 to 3, **characterized in that** a document representing a group has low level parameters whose values are close to the mean of the values of the documents of the group.

9. Reproduction method according any one of the aforementioned claims, **characterized in that** if several documents are representative of a group, the reproduction of each of the documents is carried out sequentially during a determined period.

10. Reproduction method according any one of the aforementioned claims, **characterized in that** the identifier reproduced is of an audible nature.

11. Reproduction method according any one of claims 1 to 9, **characterized in that** the identifier reproduced is of a graphic nature.

12. Reproduction device of audio documents (1; 5.1) comprising a command introduction means (8, 5.8) and a recording means (9) of audio documents, **characterized in that** it further comprises
- a means for analysing the sound signals of each audio document recorded to determine at least one audio characteristic,
- a means (3, 12, 5.3, 5.12) for partitioning the documents into groups of documents having at least one similar audio characteristic,
- a means for determining (3, 12 ; 5.3, 5.12) at least one document representing each group,
- a means for calculating (3, 12, 5.3, 5.12) positioning data (xi, yi) associated with each document in a space, the data being determined by at least one characteristic specific to the document calculated by the analysis means, a positioning data also being assigned to the position of the user within the space,
- a means for selecting (3, 12, 5.3, 5.12) at least one document representing a group, the document or documents having a position situated at a distance less than a distance determined with respect to the position of the user in the space.
- a means for reproducing (10, 11; 5.1, 5.11) the selected document or documents representing a group.

13. Reproduction device of audio documents according to claim 12, **characterized in that** it further comprises an introduction means of navigation commands (8; 5.8) of groups in groups, each command activating the reproduction of at least one identifier representing the group graphically highlighted.

14. Reproduction device of audio documents according to claim 12 or 13, **characterized in that** it comprises an introduction means of a command (8; 5.8) activating the means for reproducing (10, 11; 5.1, 5.11) audio documents within the group of which the identifier is reproduced, the reproduction of the audio documents being carried out according to a predetermined order.

15. Reproduction device of audio documents according to any one of claims 12 to 14, **characterized in that** it comprises a means for representing (11) the documents in a space of which the number of dimensions is equal to the number of audio parameters, and of which the documents are associated with points arranged within this space, the means for determining at least one document representing a group (3, 12; 5.3, 5.12) takes into account the distance the distance between the equibarycentre of the points associated with the documents of the group and the point associated with this document.

16. Reproduction device of audio documents according to claim 15, **characterized in that** the means for determining at least one document representing a group (3, 12; 5.3, 5.12) chooses the ones/one of which the point is the closest to the equibarycentre of the points of the documents of the group.

17. Reproduction device of audio documents according to claim 15 or 16, depending on claim 14, **characterized in that** the reproduction means (10, 11; 5.1, 5.11) reproduces the documents by beginning with the one whose point is the closest to the barycentre of the points associated with the documents of the group, and those located further and further away from the barycentre.

18. Reproduction device of audio documents according to any one of claims 12 to 17, **characterized in that** the means for determining at least one document representing a group (3, 12; 5.3, 5.12) chooses the ones/one of which the values of the audio characteristics are close to the mean of the values of the documents of the group.

19. Reproduction device of audio documents according to any one of claims 12 to 18, **characterized in that** if the determination means (3, 12; 5.3, 5.12) has selected several documents representing a group, the reproduction means (10, 11; 5.1, 5.11) sequentially reproduces each identifier of the documents chosen for a determined period.

20. Reproduction device of audio documents according to any one of claims 12 to 19, **characterized in that** the reproduction means (10, 11; 5.1, 5.11) reproduces at least one audible identifier.

21. Reproduction device of audio documents according to any one of claims 12 to 20, **characterized in that** the reproduction means (10, 11; 5.1, 5.11) reproduces at least one graphic identifier.

## Patentansprüche

1. Verfahren zur Wiedergabe innerhalb eines Wiedergabegerätes von im Gerät gespeicherten Audio-Dokumenten,
**dadurch gekennzeichnet,**
**dass** das Verfahren die folgenden, innerhalb des Gerätes durchgeführten, Schritte umfasst:
- Analyse der Tonsignale jedes Audio-Dokumentes, für die Bestimmung von mindestens einem Audiomerkmal,
- Partinionnierung der Dokumente in Dokumentengruppen, die mindestens ein ähnliches Audiomerkmal besitzen,
- Bestimmung von mindestens einem Audio-Dokument, das jede Gruppe repräsentiert,
- Positionierung einer Mehrzahl von Audio-Dokumenten in einem Raum, wobei die Positionierung eines Audio-Dokumentes Funktion von mindestens einem, während der Analyse, bestimmten Merkmal des Dokumentes ist, wobei der Benutzer eine Position in diesem Raum einnimmt,
- Wiedergabe von mindestens einem Dokument, das eine Gruppe repräsentiert, wobei das oder die wiedergegebenen Dokumente, eine Position in einer Entfernung einnehmen, die kleiner ist, als eine Entfernung, die im Vergleich zu der Position des Benutzers im Raum bestimmt wurde.

2. Verfahren zur Wiedergabe nach Anspruch 1, **dadurch gekennzeichnet, dass** das Verfahren einen Einbringungsschritt einer Navigationssteuerung von Gruppen zu Gruppen umfasst, wobei jede Steuerung die Wiedergabe von mindestens einem grafisch markierten Kennzeichen, das die Gruppe repräsentiert, aktiviert.

3. Verfahren zur Wiedergabe nach Anspruch 1 oder 2, **dadurch gekennzeichnet, dass** das Verfahren einen Einbringungsschritt einer Steuerung umfasst, die die Wiedergabe von Audio-Dokumenten innerhalb der Gruppe, dessen Kennzeichen wiedergegeben wird, aktiviert, wobei die Wiedergabe der Audio-Dokumente in einer vorgegebenen Reihenfolge erfolgt.

4. Verfahren zur Wiedergabe nach einem der vorangehenden Ansprüche,
**dadurch gekennzeichnet, dass** der Bestimmungsschritt einen Darstellungsschritt der Dokumente in einem Raum umfasst, dessen Anzahl an Dimensionen der Anzahl der Audio-Parameter entspricht und dessen Dokumente Punkten innerhalb dieses Raumes zugeordnet sind, wobei die Bestimmung eines Dokumentes der Gruppe, das die Gruppe repräsentiert, von der Entfernung zwischen dem Schwerpunkt des Dreiecks, das aus den zu den Dokumenten der Gruppe zugeordneten Punkten besteht, und dem zu dem Dokument zugeordneten Punkt abhängt.

5. Verfahren zur Wiedergabe nach Anspruch 4, **dadurch gekennzeichnet, dass** der Darstellungsschritt einen Projektionsschritt der zugeordneten Punkte aller Dokumente in einen Raum mit vorgegebener Dimension und mit den Audio-Parametern als Koordinaten umfasst, wobei die Berechnung der Entfernung zwischen dem Schwerpunkt des Dreiecks der Gruppe und dem zu diesem Dokument zugeordneten Punkt im Projektionsbereich erfolgt.

6. Verfahren zur Wiedergabe nach einem der vorangehenden Ansprüche 4 oder 5, **dadurch gekennzeichnet, dass** die Dokumente, die eine Gruppe repräsentieren, Punkten zugeordnet sind, die sich innerhalb eines vorgegebenen Intervalls vom Schwerpunkt des Dreiecks der Punkte der Dokumente der Gruppe entfernt befinden.

7. Verfahren zur Wiedergabe nach einem der vorangehenden Ansprüche 4 bis 6 in Verbindung mit Anspruch 3, **dadurch gekennzeichnet, dass** die vorgegebene Reihenfolge der Wiedergabe der Dokumente einer Gruppe mit dem Dokument beginnt, dessen Punkt am nächsten zum Schwerpunkt des Dreiecks liegt und anschließend von den Punkten gefolgt wird, die jeweils immer weiter vom Schwerpunkt des Dreiecks entfernt sind.

8. Verfahren zur Wiedergabe nach Anspruch 1 bis 3, **dadurch gekennzeichnet, dass** ein Dokument, das eine Gruppe repräsentiert, über niedrig gestufte Parameter verfügt, deren Werte nahe des Durchschnitts der Werte der Dokumente der Gruppe sind.

9. Verfahren zur Wiedergabe nach einem der vorangehenden Ansprüche, **dadurch gekennzeichnet, dass** falls mehrere Dokumente eine Gruppe repräsentieren, die Wiedergabe jedes der Dokumente sequenziell über einen vorgegebenen Zeitraum erfolgt.

10. Verfahren zur Wiedergabe nach einem der vorangehenden Ansprüche, **dadurch gekennzeichnet, dass** das wiedergegebene Kennzeichen ein Ton ist.

11. Verfahren zur Wiedergabe nach einem der Ansprüche 1 bis 9, **dadurch gekennzeichnet, dass** das wiedergegebene Kennzeichen eine Grafik ist.

12. Wiedergabegerät für Audio-Dokumente (1; 5.1) mit einem Mittel zur Steuerungseinbringung (8, 5.8) und einem Mittel zur Speicherung (9) von Audio-Dokumenten, **dadurch gekennzeichnet, dass** dieses außerdem
- über ein Mittel zur Analyse der Tonsignale jedes gespeicherten Audio-Dokumentes für die Bestimmung von mindestens einem Tonmerkmal,
- über ein Mittel (3, 12, 5.3, 5.12) zur Partinionnierung der Dokumente in Dokumentengruppen mit mindestens einem ähnlichen Tonmerkmal,
- über ein Mittel zur Bestimmung (3, 12; 5.3, 5.12) von mindestens einem Dokument, dass jeweils eine Gruppe repräsentiert,
- über ein Mittel zur Berechnung (3, 12, 5.3, 5.12) der zugeordneten Positionsdaten (xi, yi) die jedem Dokument in einem Raum zugeordnet sind, wobei die Daten anhand mindestens einem Merkmal des berechneten Dokumentes über ein Mittel zur Analyse, wobei eine Positionsdatei generell ebenfalls der Position des Benutzers innerhalb des Raumes zugeordnet ist,
- über ein Mittel zur Auswahl (3, 12, 5.3, 5.12) von mindestens einem Dokument, das eine Gruppe repräsentiert, wobei das oder die ausgewählten Dokumente eine Position, in einer Entfernung einnehmen, die kleiner ist, als eine Entfernung, die im Vergleich zu der Position des Benutzers im Raum bestimmt wurde,
- über ein Mittel zur Wiedergabe (10, 11; 5.1, 5.11) des oder der ausgewählten Dokumente, die eine Gruppe repräsentieren, umfasst.

13. Wiedergabegerät für Audio-Dokumente nach Anspruch 12, **dadurch gekennzeichnet, dass** das Gerät außerdem einen Einbringungsschritt einer Navigationssteuerung (8; 5.8) von Gruppen zu Gruppen umfasst, wobei jede Steuerung die Wiedergabe von mindestens einem grafisch markierten Kennzeichen, das die Gruppe repräsentiert, aktiviert.

14. Wiedergabegerät für Audio-Dokumente nach Anspruch 12 oder 13, **dadurch gekennzeichnet, dass** das Gerät ein Mittel zur Einbringung einer Steuerung (8; 5.8) umfasst, die das Mittel zur Wiedergabe (10, 11; 5.1, 5.11) der Audio-Dokumente innerhalb der Gruppe, dessen Kennzeichen wiedergegeben werden, aktiviert, wobei die Wiedergabe der Audio-Dokumente erfolgt in einer vorgegebenen Reihenfolge.

15. Wiedergabegerät für Audio-Dokumente nach einem der vorangehenden Ansprüche 12 bis 14, **dadurch gekennzeichnet, dass** das Gerät ein Mittel zur Darstellung (11) der Dokumente in einem Raum umfasst, dessen Anzahl an Dimensionen der Anzahl der Audio-Parameter entspricht und dessen Dokumente den, in diesem Raum befindlichen, Punkten zugeordnet sind, das Mittel zur Bestimmung von mindestens einem Dokument, das die Gruppe repräsentiert (3, 12; 5.3, 5.12), die Entfernung zwischen dem Schwerpunkt des Dreiecks, der zu den Dokumenten der Gruppe zugeordneten Punkte und dem zu dem Dokument zugeordneten Punkt, beinhaltet.

16. Wiedergabegerät für Audio-Dokumente nach Anspruch 15, **dadurch gekennzeichnet, dass** das Mittel zur Bestimmung von mindestens einem Dokument, das die Gruppe repräsentiert (3, 12; 5.3, 5.12) das oder die Dokumente, dessen Punkt am nächsten zum Schwerpunkt des Dreiecks der Punkte der Dokumente der Gruppe ist, wählt.

17. Wiedergabegerät für Audio-Dokumente nach Anspruch 15 oder 16 in Verbindung mit Anspruch 14, **dadurch gekennzeichnet, dass** das Mittel zur Wiedergabe (10, 11; 5.1, 5.11) die Dokumente wiedergibt, indem mit dem Dokument begonnen wird, dessen Punkt am nächsten zum Schwerpunkt des Dreiecks der Punkte, die den Dokumenten der Gruppe zugeordnet sind, liegt und anschließend von den Punkten gefolgt wird, die immer weiter vom Schwerpunkt des Dreiecks entfernt sind.

18. Wiedergabegerät für Audio-Dokumente nach einem der vorangehenden Ansprüche 12 bis 17, **dadurch gekennzeichnet, dass** das Mittel zur Bestimmung von mindestens einem Dokument, das die Gruppe (3, 12; 5.3, 5.12) repräsentiert, das oder die Dokumente, dessen Werte der Audio-Parameter nahe des Durchschnitts der Werte der Dokumente der Gruppe liegen, auswählt.

19. Wiedergabegerät für Audio-Dokumente nach einem der vorangehenden Ansprüche 12 bis 18, **dadurch gekennzeichnet, dass** falls das Mittel zur Bestimmung mehrere Dokumente, die die Gruppe repräsentieren, ausgesucht hat, das Mittel zur Bestimmung sequenziell jedes Kennzeichen der ausgewählten Dokumente für einen vorgegebenen Zeitraum wiedergibt.

20. Wiedergabegerät für Audio-Dokumente nach einem der vorangehenden Ansprüche 12 bis 19, **dadurch gekennzeichnet, dass** das Mittel zur Wiedergabe (10, 11; 5.1, 5.11) mindestens ein Tonkennzeichen wiedergibt.

21. Wiedergabegerät für Audio-Dokumente nach einem der vorangehenden Ansprüche 12 bis 20, **dadurch gekennzeichnet, dass** das Mittel zur Wiedergabe (10, 11; 5.1, 5.11) mindestens ein Grafikkennzeichen wiedergibt.
